# EUROPÄISCHE PATENTSCHRIFT

(11) **EP 4 144 576 B1**
(45) Veröffentlichungstag und Bekanntmachung des Hinweises auf die Patenterteilung: **15.04.2026**
(21) Anmeldenummer: 22191480.7
(22) Anmeldetag: 22.08.2022
(51) Int. Cl.: B60L 58/26

(54) **FAHRZEUG, INSBESONDERE SCHIENENFAHRZEUG MIT ENERGIESPEICHER UND KÜHLEINRICHTUNG**
VEHICLE, IN PARTICULAR RAIL VEHICLE WITH ENERGY STORAGE AND COOLING DEVICE
VÉHICULE, EN PARTICULIER VÉHICULE FERROVIAIRE DOTÉ D'UN ACCUMULATEUR D'ÉNERGIE ET D'UN DISPOSITIF DE REFROIDISSEMENT

(30) Priorität: 01.09.2021 DE 102021209629
(43) Veröffentlichungstag der Anmeldung: 08.03.2023
(73) Patentinhaber: Siemens Mobility GmbH, 80997 München (DE)
(72) Erfinder: Fischperer, Rolf, 91338 Igensdorf (DE)
(74) Vertreter: Siemens Patent Attorneys

(56) Entgegenhaltungen:
- US-A1- 2012 129 020
- US-A1- 2017 282 677
- US-A1- 2018 141 458

## Beschreibung

Die Erfindung bezieht sich auf Fahrzeuge, insbesondere Schienenfahrzeuge, die mit einem Energiespeicher und einer Kühleinrichtung zum Kühlen des Energiespeichers ausgestattet sind. Fahrzeuge mit Energiespeicher und Kühleinrichtung sind beispielsweise in den Druckschriften DE 10 2012 211 259 A1 und DE 10 2018 220 488 A1 beschrieben.

Aus dem Dokument US 2018/141458 A1 ist ein Fahrzeug bekannt, das ein thermisches System für eine Batterie sowie eine Steuerung für das thermische System aufweist, wobei während einer Fahrt des Fahrzeugs die Batterie gekühlt wird, wenn die Temperatur der Batterie einen unteren Schwellwert überschreitet und eine Leistungsausgabe der Batterie unterdrückt wird, wenn die Temperatur der Batterie einen oberen Schwellwert überschreitet, und wobei bei einer Verbindung mit einer Ladestation die Batterie auf eine Temperatur zwischen dem unteren und dem oberen Schwellwert erwärmt wird.

Der Erfindung liegt die Aufgabe zugrunde, ein Fahrzeug anzugeben, bei dem eine Überhitzung des Energiespeichers in einfacher Weise verhindert werden kann.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass zum Ansteuern der Kühleinrichtung eine Steuereinrichtung vorhanden ist, die dazu ausgestaltet ist, auf der Basis von Belastungsdaten, die eine bei der weiteren Fahrt zu erwartende Belastung oder eine möglicherweise bei der weiteren Fahrt notwendig werdende Belastung des Energiespeichers beschreiben, einen Kühlbedarf zu prognostizieren und die Kühleinrichtung in Abhängigkeit von dem prognostizierten Kühlbedarf zu steuern.

Ein wesentlicher Vorteil des erfindungsgemäßen Fahrzeugs ist darin zu sehen, dass durch die erfindungsgemäß vorgesehene Steuereinrichtung und die erfindungsgemäß vorgesehene Prognose des Kühlbedarfs eine besonders effiziente Kühlung mittels der Kühleinrichtung erreicht werden kann. Beispielsweise kann bereits ein Kühlen des Energiespeichers begonnen werden, noch bevor tatsächlich eine Erwärmung des Energiespeichers durch eine Energieentnahme auftritt, sodass bereits eine geringe Kühlleistung ausreicht, um eine Überhitzung des Energiespeichers zu vermeiden. Weiterhin muss die Kühleinrichtung nicht prophylaktisch oder permanent betrieben werden, sodass nicht unnötig Energie zum Kühlen verbraucht wird.

Die Steuereinrichtung berücksichtigt bei der Prognose des Kühlbedarfs vorzugsweise die Umgebungstemperatur; der prognostizierte Kühlbedarf wird vorzugsweise umso höher geschätzt, je höher die Umgebungstemperatur ist.

Eine möglicherweise bei der weiteren Fahrt notwendig werdende Belastung des Energiespeichers kann beispielsweise von der Prognoseeinrichtung berücksichtigt werden, indem sie Komponenten, die eine andere Energieversorgung als die durch den Energiespeicher bereitstellen - beispielsweise eine im Fahrtverlauf voraus liegende Stromschiene - , wegen eines technischen Mangels als ausgefallen ansieht und unterstellt, dass die ausgefallene Energieversorgung dort ersatzweise durch den Energiespeicher bereitgestellt werden soll.

Erfindungsgemäß ist die Steuereinrichtung dazu ausgestaltet, das Erfüllen zumindest einer Auslösebedingung zu prüfen und bei Erfüllung der zumindest einen Auslösebedingung die Kühleinrichtung zu aktivieren und den Energiespeicher zu kühlen.

Die Steuereinrichtung ist vorzugsweise dazu ausgestaltet, auf der Basis des prognostizierten Kühlbedarfs einen Sollkühlleistungswert zu ermitteln, der die Sollkühlleistung angibt, mit der die Kühleinrichtung zum Decken des prognostizierten Kühlbedarfs arbeiten soll.

Erfindungsgemäß ist die Steuereinrichtung dazu ausgestaltet ist, bei Erfüllung der Auslösebedingung oder zumindest einer der Auslösebedingungen die Kühleinrichtung noch vor Eintritt der tatsächlichen Belastung des Energiespeichers zu aktivieren und die Temperatur des Energiespeichers abzusenken und somit noch vor Eintritt der tatsächlichen Belastung einen Kühlpuffer für den Energiespeicher zu erzeugen.

Die Prüfung zumindest einer der Auslösebedingungen besteht vorzugsweise darin festzustellen, ob
- ein vorgegebener Streckenpunkt passiert wird oder passiert worden ist und/oder
- eine Fehlermeldung einer zur regulären Energieversorgung erforderlichen Komponente eintrifft und/oder
- ein Entnahmestrom aus dem Energiespeicher eine vorgegebene Entnahmestromschwelle erreicht oder überschreitet und/oder
- die Umgebungstemperatur des Energiespeichers eine vorgegebene Temperaturschwelle erreicht oder überschreitet
   und/oder
- die Gehäusetemperatur eines den Energiespeicher aufnehmenden Gehäuses eine vorgegebene Temperaturschwelle erreicht oder überschreitet.

Bordnetzbatterien können im Betrieb stark unterschiedlich bzw. intermittierend belastet werden, sich dann zeitweise unzulässig erwärmen und müssen daher unter Umständen zeitweise gekühlt werden. Dies gilt insbesondere für Bordnetzbatterien, wenn die normale Bordnetzversorgung ausgefallen ist und die Bordnetzbatterie neben der Versorgung der Eigenverbraucher gleichzeitig auch zu Notfahrten genutzt wird. Als Energiespeicher werden demgemäß vorzugsweise Bordnetzbatterien in der beschriebenen Weise gekühlt.

Vorteilhaft ist es, wenn die Kühleinrichtung zumindest ein Peltierelement umfasst oder durch ein solches gebildet wird. Peltierelemente sind vorteilhaft, da sie wenig Instandhaltung benötigen, wenig Bauraum erforderlich machen und anders als Ventilatoren oder dergleichen keine Lärmbelästigung verursachen.

Mit Blick auf minimalen Installationsaufwand wird es als vorteilhaft angesehen, wenn die Kühleinrichtung zumindest ein Peltierelement umfasst, das an einer Außenseite einer Gehäusewand eines den Energiespeicher aufnehmenden Gehäuses angebracht ist, und/oder zumindest ein Peltierelement umfasst, das an einer Innenseite einer Gehäusewand des den Energiespeicher aufnehmenden Gehäuses angebracht ist. Auf diese Weise wird eine gleichmäßige Kühlung des Energiespeichers durch die Luft im Container erreicht, ohne dass aufwändige Kühlkonstruktionen erforderlich sind wie beispielsweise in DE 10 2012 211 259 A1, DE 10 2015 220 759 A1 oder DE 10 2018 220 488 A1 beschrieben.

Mit Blick auf eine einfache Energieversorgung der Kühleinrichtung wird es als vorteilhaft angesehen, wenn die Kühleinrichtung zumindest eine Reihenschaltung an Peltierelementen umfasst, die beim Betrieb der Kühleinrichtung mit der an den Anschlussklemmen des Energiespeichers anliegenden Spannung beaufschlagt wird.

Mit Blick auf eine einfache Steuerung der Kühlleistung der Kühleinrichtung wird es als vorteilhaft angesehen, wenn die Kühleinrichtung zwei oder mehr elektrisch parallel geschaltete Reihenschaltungen an Peltierelementen umfasst, die einzeln aktivierbar sind und nach Aktivierung jeweils mit der an den Anschlussklemmen des Energiespeichers anliegenden Spannung beaufschlagt werden, und die Steuereinrichtung dazu ausgestaltet ist, die Anzahl der zu aktivierenden Reihenschaltungen in Abhängigkeit vom prognostizierten Kühlbedarf festzulegen.

Bei der letztgenannten Ausführungsvariante ist es vorteilhaft, wenn die Steuereinrichtung dazu ausgestaltet ist, die Anzahl der zu aktivierenden Reihenschaltungen derart zu wählen, dass die Kühlleistung durch die aktivierten Reihenschaltungen der jeweiligen Sollkühlleistung entspricht, die die Kühleinrichtung zum Decken des prognostizierten Kühlbedarfs erzeugen soll.

Die Erfindung bezieht sich darüber hinaus auf ein Verfahren zum Kühlen eines Energiespeichers eines Fahrzeugs, insbesondere Schienenfahrzeugs, mit einer Kühleinrichtung. Erfindungsgemäß ist vorgesehen, dass auf der Basis von Belastungsdaten, die eine bei der weiteren Fahrt zu erwartende Belastung oder eine während der Fahrt möglicherweise notwendige Belastung des Energiespeichers beschreiben, ein Kühlbedarf prognostiziert wird und die Kühleinrichtung in Abhängigkeit von dem prognostizierten Kühlbedarf gesteuert wird, von der Steuereinrichtung das Erfüllen zumindest einer Auslösebedingung geprüft wird und bei Erfüllung der zumindest einen Auslösebedingung die Kühleinrichtung aktiviert wird und der Energiespeicher gekühlt wird, und bei Erfüllung der Auslösebedingung oder zumindest einer der Auslösebedingungen die Kühleinrichtung noch vor Eintritt der tatsächlichen Belastung des Energiespeichers aktiviert wird und die Temperatur des Energiespeichers abgesenkt wird und somit noch vor Eintritt der tatsächlichen Belastung einen Kühlpuffer für den Energiespeicher erzeugt wird.

Bezüglich der Vorteile des erfindungsgemäßen Verfahrens sowie vorteilhafter Ausgestaltungen des erfindungsgemäßen Verfahrens sei auf die obigen Ausführungen im Zusammenhang mit dem erfindungsgemäßen Fahrzeug und dessen vorteilhafte Ausgestaltungen verwiesen.

Die Erfindung wird nachfolgend anhand von Ausführungsbeispielen näher erläutert; dabei zeigen beispielhaft
- Figur 1: ein Ausführungsbeispiel für ein erfindungsgemäßes Schienenfahrzeug, das mit einer bezüglich der Kühlleistung einstellbaren Kühleinrichtung ausgestattet ist,
- Figur 2: ein Ausführungsbeispiel für ein erfindungsgemäßes Schienenfahrzeug, das mit einer ein- und ausschaltbaren Kühleinrichtung ausgestattet ist,
- Figur 3: ein Ausführungsbeispiel für eine bevorzugte Anordnung einer Kühleinrichtung innerhalb eines eine Batterie aufnehmenden Gehäuses,
- Figur 4: ein Ausführungsbeispiel für eine bevorzugte Anordnung einer Kühleinrichtung außerhalb eines eine Batterie aufnehmenden Gehäuses,
- Figur 5: ein Diagramm eines beispielhaften Temperaturverlaufs im Falle einer temperaturgesteuerten Ansteuerung der Kühleinrichtung,
- Figur 6: ein Diagramm eines beispielhaften Temperaturverlaufs im Falle einer batteriestromgesteuerten Ansteuerung der Kühleinrichtung und
- Figur 7: ein Diagramm eines beispielhaften Temperaturverlaufs im Falle einer streckenbezogenen Ansteuerung der Kühleinrichtung.

In den Figuren werden der Übersicht halber für identische oder vergleichbare Komponenten dieselben Bezugszeichen verwendet.

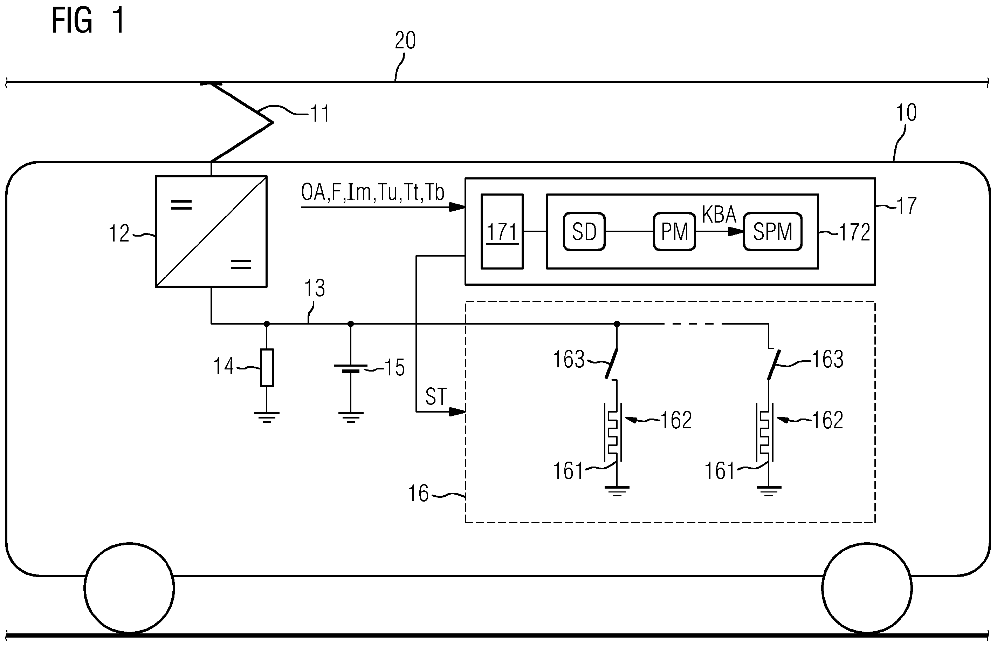

Die Figur 1 zeigt ein Ausführungsbeispiel für ein erfindungsgemäßes Schienenfahrzeug 10, das mit einem Stromabnehmer 11 an ein externes Energieversorgungsnetz 20 angeschlossen ist. Das Schienenfahrzeug 10 befindet sich bei der Darstellung gemäß Figur 1 also in einem elektrifizierten Abschnitt eines Eisenbahnschienennetzes.

Der Stromabnehmer 11 steht mit einer Anschlussseite eines Umrichters 12, bei dem es sich beispielsweise um einen Hilfsbetriebeumrichter mit integriertem Ladegerät handeln kann, in Verbindung. An die andere Anschlussseite des Umrichters ist ein Gleichspannungszwischenkreis 13 angeschlossen, der beispielsweise zum Speisen eines Bordnetzverbrauchers 14 dient.

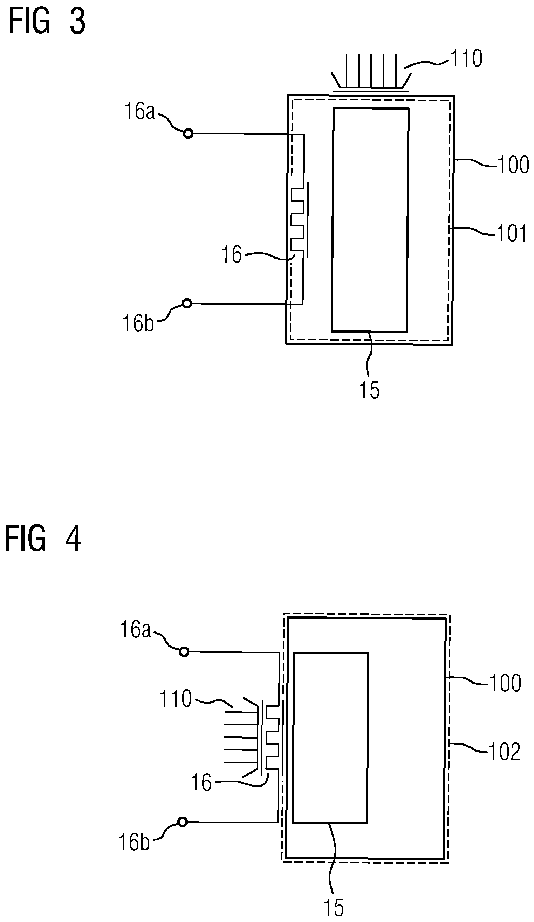

An den Gleichspannungszwischenkreis 13 sind darüber hinaus ein Energiespeicher in Form einer Bordnetzbatterie 15 und eine Kühleinrichtung 16 angeschlossen. Die Kühleinrichtung 16 dient zum Kühlen der Bordnetzbatterie 15 und ist zu diesem Zweck räumlich benachbart zur Bordnetzbatterie 15 angeordnet oder steht mit dieser direkt in Verbindung. Bevorzugte mechanische Anordnungen der Kühleinrichtung 16 relativ zur Bordnetzbatterie 15 werden weiter unten im Zusammenhang mit den Figuren 3 und 4 erläutert.

Die Kühleinrichtung 16 umfasst bei dem Ausführungsbeispiel gemäß Figur 1 eine Vielzahl an Reihenschaltungen 161, die jeweils eine Mehrzahl an in Reihe geschalteten Peltierelementen 162 sowie ein dazu in Reihe geschaltetes Schaltelement 163 umfassen. Mit den Schaltelementen 163 kann jede der Reihenschaltungen 161 individuell ein- oder ausgeschaltet werden, sodass durch Auswahl der eingeschalteten Schaltelemente 163 die Gesamtkühlleistung der Kühleinrichtung 16 eingestellt werden kann. Durch komplettes Ausschalten aller Schaltelemente 163 lässt sich die Kühleinrichtung 16 insgesamt deaktivieren; sind alle Schaltelemente 163 eingeschaltet, so kühlt die Kühleinrichtung 16 mit maximaler Kühlleistung.

Die Steuerung der Kühleinrichtung 16 erfolgt durch eine Steuereinrichtung 17 des Schienenfahrzeugs 10. Die Steuereinrichtung 17 ist mit einer Recheneinrichtung 171 und einem Speicher 172 ausgestattet. In dem Speicher 172 sind Streckendaten SD, ein Prognosemodul PM, das bei Ausführung durch die Recheneinrichtung 171 eine Prognoseeinrichtung bildet, und ein Steuerprogrammmodul SPM abgespeichert, das bei Ausführung durch die Recheneinrichtung 171 die Ansteuerung der Kühleinrichtung 16 bestimmt.

Das Steuerprogrammmodul SPM und das Prognosemodul PM verarbeiten vorzugsweise unter anderem eine Ortsangabe OA, die den jeweiligen Ort des Schienenfahrzeugs 10 auf der zu befahrenden Strecke angibt, Fehlermeldungen F, einen Strommesswert Im, der den jeweiligen Entnahmestrom aus der Bordnetzbatterie 15 quantifiziert, einen Temperaturmesswert Tu, der die Umgebungstemperatur beschreibt, einen Temperaturmesswert Tt, der die Gehäusetemperatur der Bordnetzbatterie 15 beschreibt, und/oder einen Temperaturmesswert Tb, der die Batterietemperatur beschreibt.

Die Funktion des Prognosemoduls PM besteht darin, auf der Basis der Streckendaten SD und der jeweiligen Ortsangabe OA Belastungsdaten zu prognostizieren, die eine bei der weiteren Fahrt des Schienenfahrzeugs 10 zu erwartende Belastung oder eine möglicherweise bei der weiteren Fahrt notwendig werdende Belastung der Bordnetzbatterie 15 beschreiben. Auf der Basis dieser Belastungsdaten erzeugt das Prognosemodul PM eine Kühlbedarfsangabe KBA, die den ermittelten Kühlbedarf angibt. Eine Belastung der Bordnetzbatterie 15 ist beispielsweise zu erwarten, wenn aufgrund der Streckendaten SD absehbar ist, dass das Schienenfahrzeug 10 demnächst in einen nicht elektrifizierten Abschnitt des Eisenbahnschienennetzes einfahren wird und die Bordnetzbatterie 15 zum Speisen des Bordnetzverbrauchers 14 eingesetzt werden muss.

Die Kühlbedarfsangabe KBA wird von dem Prognosemodul PM zum Steuerprogrammmodul SPM übertragen, das die Steuerung der Schaltelemente 163 der Kühleinrichtung 16 übernimmt und damit die von der Kühleinrichtung 16 bereitgestellte Kühlleistung zum Decken des Kühlbedarfs festlegt.

Die Funktion des Steuerprogrammmoduls SPM besteht bei dem Ausführungsbeispiel gemäß der Figur 1 also unter anderem darin, auf der Basis der Kühlbedarfsangabe KBA die Anzahl der einzuschaltenden Schaltelemente 163, also die Sollkühlleistung zu ermitteln, mit der die Kühleinrichtung zum Decken des prognostizierten Kühlbedarfs arbeiten soll. Eine weitere Aufgabe des Steuerprogrammmoduls SPM besteht darin, das Erfüllen von Auslösebedingungen zu prüfen, die eine Aktivierung der Kühleinrichtung 16 auslösen sollen.

Das Steuerprogrammmodul SPM kann beispielsweise als Auslösebedingung prüfen, ob bei der Fahrt des Schienenfahrzeugs 10 in einem elektrifizierten Streckenabschnitt ein vorgegebener Streckenpunkt X0 passiert worden ist bzw. gerade passiert wird. Fährt das Schienenfahrzeug 10 beispielsweise auf einen nichtelektrifizierten Streckenabschnitt zu, so ist davon auszugehen, dass die Bordnetzbatterie 15 stark belastet werden wird und aus der Bordnetzbatterie 15 ein hoher Entnahmestrom fließen wird. Der hohe Entnahmestrom wird die Temperatur der Bordnetzbatterie 15 ansteigen lassen, sodass zu befürchten ist, dass die Bordnetzbatterie 15 eine maximale Grenztemperatur Tg überschreiten könnte. Um dies zu verhindern, wird das Steuerprogrammmodul SPM vorzugsweise noch in dem elektrifizierten Streckenabschnitt die Kühleinrichtung 16 aktivieren und die Temperatur der Bordnetzbatterie 15 absenken, also noch bevor die Belastung tatsächlich eintritt bzw. das Befahren des nichtelektrifizierten Streckenabschnitts tatsächlich beginnt. Es wird damit ein Kühlpuffer dT für die Bordnetzbatterie 15 geschaffen, sodass nach Einfahrt in den nichtelektrifizierten Abschnitt und bei Belastung der Bordnetzbatterie 15 eine thermische Überlastung der Bordnetzbatterie 15 vermieden wird.

Alternativ oder zusätzlich kann das Steuerprogrammmodul SPM als Auslösebedingung überprüfen, ob der Entnahmestrom aus der Bordnetzbatterie 15 eine vorgegebene Entnahmestromschwelle überreicht oder überschreitet. Ist dies der Fall, so kann das Steuerprogrammmodul SPM das Steuersignal ST zur Aktivierung der Kühleinrichtung 16 ausgeben, falls noch keine andere Auslösebedingung als erfüllt angesehen wurde und die Kühleinrichtung 16 zuvor noch nicht aktiviert worden war.

Auch ist es möglich, das Steuersignal ST zur Aktivierung der Kühleinrichtung 16 auszugeben, wenn die Umgebungstemperatur der Bordnetzbatterie 15 und/oder die Gehäusetemperatur eines die Bordnetzbatterie 15 aufnehmenden Gehäuses eine vorgegebene Temperaturschwelle erreicht oder überschreitet.

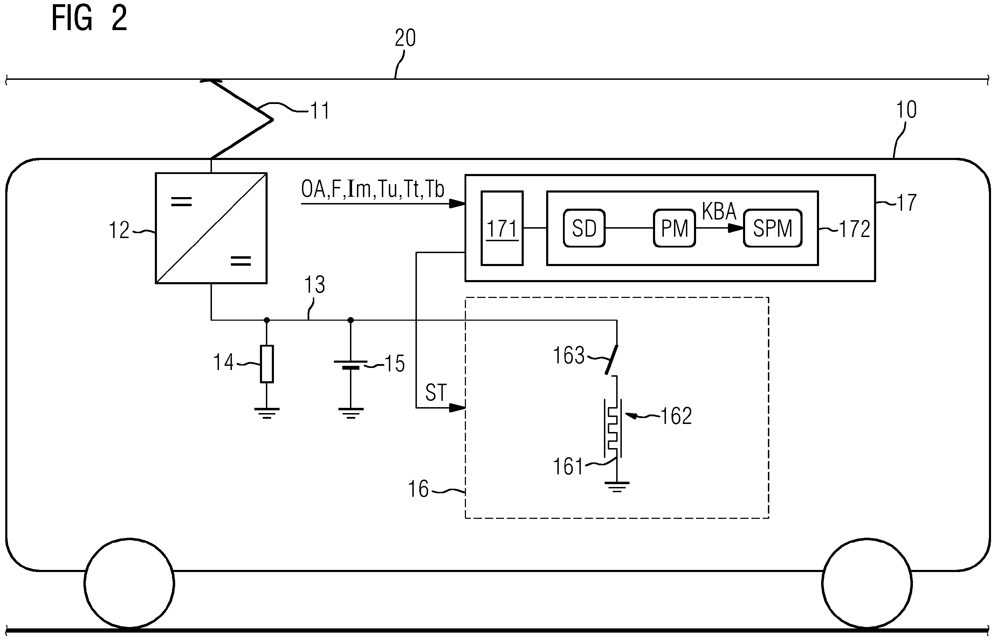

Die Figur 2 zeigt ein zweites Ausführungsbeispiel für ein erfindungsgemäßes Schienenfahrzeug. Im Unterschied zu dem Ausführungsbeispiel gemäß Figur 1 ist die Kühleinrichtung 16 lediglich mit einer einzigen Reihenschaltung 161 ausgestattet, sodass die Kühleinrichtung 16 hinsichtlich ihrer Kühlleistung nicht verstellbar ist, sondern lediglich ein- oder ausgeschaltet werden kann. Im Übrigen gelten die obigen Erläuterungen im Zusammenhang mit der Figur 1 bei dem Ausführungsbeispiel gemäß Figur 2 entsprechend.

Die Figur 3 zeigt, für die Schienenfahrzeuge 10 gemäß den Figuren 1 und 2, eine bevorzugte räumliche Anordnung der Kühleinrichtung 16, deren elektrische Anschlüsse mit den Bezugszeichen 16a und 16b gekennzeichnet sind, relativ zur Bordnetzbatterie 15 näher im Detail.

Bei dem Ausführungsbeispiel gemäß Figur 3 ist die Kühleinrichtung 16 innerhalb eines Gehäuses 100 untergebracht, in dem sich auch die Bordnetzbatterie 15 befindet. Die Kühleinrichtung 16 mit ihren Peltierelementen 162 kühlt dabei die Luft innerhalb des Gehäuses 100 und damit mittelbar die Batteriezellen der Bordnetzbatterie 15.

Um eine weitere Kühlung des Gehäuses 100 zu gewährleisten, kann das Gehäuse 100 außenseitig darüber hinaus mit einem optionalen Kühlkörper 110 versehen sein.

Bei dieser Anordnung dient das Gehäuse als Kühlkörper und ist vorteilhafterweise thermisch an die Außenluft angebunden, sodass es an diese Wärme abgeben kann, und thermisch von der Innenluft isoliert (vorzugsweise auch durch eine zusätzliche Isolationsschicht 101), sodass das Peltierelement seine Kälteleistung über die Innenluft der Batterie zuführen kann.

Die Figur 4 zeigt eine andere bevorzugte Anordnung der Kühleinrichtung 16 relativ zur Bordnetzbatterie 15. Bei dem Ausführungsbeispiel gemäß Figur 4 ist die Kühleinrichtung 16 auf der Außenseite des Gehäuses 100 angebracht; innerhalb des Gehäuses 100 befindet sich die Bordnetzbatterie 15.

Ein Kühlkörper 110 kann optional auf oder in der Nähe der Kühleinrichtung 16 montiert sein, um eine Abfuhr der von der Kühleinrichtung 16 erzeugten Abwärme zu gewährleisten.

Bei dieser Anordnung dient das Gehäuse als Kältespeicher und ist vorteilhafterweise thermisch an die Innenluft angebunden, sodass es die Kühlleistung der Batterie zuführen kann, und gegen die Außenluft thermisch isoliert (vorzugsweise auch durch eine zusätzliche Isolationsschicht 102), sodass ein Wärmeeintrag verhindert wird.

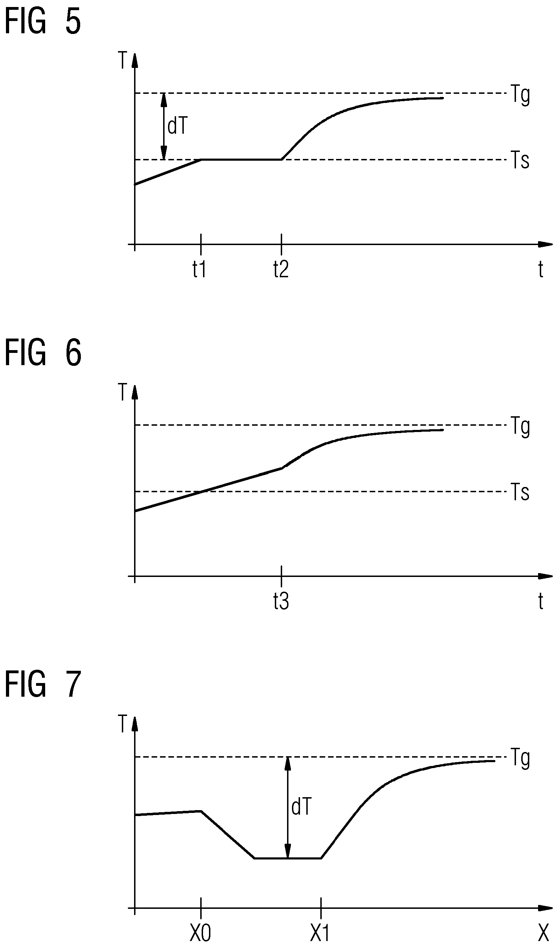

Die Figur 5 zeigt ein Ausführungsbeispiel für eine bevorzugte Arbeitsweise des Steuerprogrammmoduls SPM der Steuereinrichtung 17 bei den Figuren 1 und 2 näher im Detail, und zwar in Form eines Diagramms, das den Verlauf der Batterietemperatur T der Bordnetzbatterie 15 über der Zeit t darstellt. Bei dem Ausführungsbeispiel gemäß Figur 5 schaltet die Steuereinrichtung 17 die Kühleinrichtung 16 ein, sobald die Batterietemperatur eine vorgegebene Temperaturschwelle Ts erreicht. Dies geschieht bei der Darstellung gemäß Figur 5 zum Zeitpunkt t1.

Durch die Inbetriebnahme der Kühleinrichtung 16 wird ein Kühlpuffer dT geschaffen, der vorzugsweise auf der Basis der Streckendaten SD so bemessen ist, dass bei einem Befahren eines vorausliegenden nichtelektrifizierten Streckenabschnitts und einem Betreiben des Bordnetzverbrauchers 14 mit dem Strom der Bordnetzbatterie 15 - mit Blick auf die jeweilige Umgebungstemperatur bzw. die Gehäusetemperatur - kein Überhitzen auftreten wird; der Kühlpuffer dT wird vorzugsweise umso größer bemessen, je länger die Fahrt in dem nichtelektrifizierten Streckenabschnitt voraussichtlich sein wird.

Zum Zeitpunkt t2 wird bei dem Diagramm gemäß Figur 5 aus der Bordnetzbatterie 15 ein Entnahmestrom entnommen, sodass es zu einem Anstieg der Temperatur T der Bordnetzbatterie 15 kommt. Aufgrund der Kühlleistung der Kühleinrichtung 16 und aufgrund des zuvor bereitgestellten Kühlpuffers dT wird eine obere maximale Grenztemperatur Tg jedoch nicht überschritten.

Die Figur 6 zeigt einen alternativen Temperaturverlauf der Batterietemperatur T über der Zeit t, wenn die Steuereinrichtung 17 nicht bereits beim Erreichen der Temperaturschwelle Ts die Kühleinrichtung 16 aktiviert, sondern erst dann, wenn zum Zeitpunkt t3 ein Entnahmestrom aus der Bordnetzbatterie 15 eine vorgegebene Entnahmestromschwelle erreicht oder überschreitet.

Die Figur 7 zeigt eine andere bevorzugte Arbeitsweise der Steuereinrichtung 17 gemäß den Figuren 1 und 2 für den Fall, dass das Passieren eines vorgegebenen Streckenpunktes X0 bei der Fahrt entlang einer vorgegebenen Strecke X zum Auslösen der Kühleinrichtung 16 führt. Es lässt sich erkennen, dass nach dem Passieren des vorgegebenen Streckenpunktes X0 die Kühleinrichtung 16 aktiviert und durch das Abkühlen der Bordnetzbatterie 15 ein Kühlpuffer dT geschaffen wird. Der Kühlpuffer dT wird vorzugsweise auf der Basis der Streckendaten SD so bemessen, dass bei einem Befahren eines vorausliegenden nächsten nichtelektrifizierten Streckenabschnitts kein Überhitzen der Bordnetzbatterie 15 auftreten wird.

Erreicht dann bei der weiteren Fahrt das Schienenfahrzeug 10 einen weiteren Streckenpunkt X1, bei dem ein Einschalten der Bordnetzbatterie 15 nötig wird, weil beispielsweise der nichtelektrifizierte Streckenabschnitt erreicht wird, so kommt es zwar zu einem Anstieg der Temperatur T der Bordnetzbatterie 15, jedoch zu keiner Überhitzung, weil der zuvor geschaffene Kühlpuffer dT ein Erreichen oder Überschreiten der Grenztemperatur Tg verhindert.

Die oben im Zusammenhang mit der Beschreibungseinleitung und den Figuren 1 bis 7 beschriebenen Ausführungsbeispiele können einzelne, mehrere oder alle der folgende Merkmale aufweisen:
Die Einhausung (Container) der Bordnetzbatterie gemaß FIG. 3 oder die Innenluft gemäß FIG. 4 wird vorzugsweise über Peltierelemente gekühlt, welche wahlweise aus dem Bordnetz oder der Batterie gespeist werden können.

Die Bemessung der Peltierelemente kann so erfolgen, dass durch Reihenschaltung von Peltierelementen die optimale Betriebsspannung der Peltierelemente der Bordnetz- bzw. Batteriespannung entspricht, und durch Parallelschaltung einer entsprechenden Anzahl von Peltierelementen die erforderliche Leistung bereitgestellt werden kann.

Der Hauptstrom-Anschluss der Peltierelemente erfolgt vorzugsweise an Bordnetz-PLUS bzw. Bordnetz-MINUS, wobei mindestens einer der Anschlüsse schaltbar ist.

Das Ein- und Ausschalten der Peltierelemente kann durch Schaltelemente gemäß Stand der Technik erfolgen, beispielsweise Schütze, elektronische Halbleiterschalter, oder ähnliches.

Die Anordnung der Peltierelemente direkt an den Batteriezellen ist aus mechanischen Gründen oft nicht einfach möglich; stattdessen können die Peltierelemente an der Innenseite des Gehäuses, in dem sich die Batteriezellen befinden (Container), angeordnet und so bestromt werden, dass die kalte Seite der Peltierelemente die Innenluft kühlt und die warme Seite die Containerwand heizt. Die Vorteile sind hier: Es wird direkt die Umgebungsluft der Batteriezellen gekühlt, die Containerwandung muss nicht gekühlt werden, der Container benötigt durch seine große Oberfläche eventuell keine zusätzlichen Kühlkörper (diese können dennoch vorgesehen werden), um sich auf Umgebungstemperatur abzukühlen. Diese Ausführung ist günstig, wenn die Batteriezellen keinen thermischen Kontakt zur Containerwand haben oder die Containerinnenwand thermisch gut isoliert. Alternativ können die Peltierelemente an der Außenseite des Containers angebracht und so bestromt werden, dass die kalte Seite die Containerwand kühlt und die warme Seite über Kühlkörper mit der Umgebungsluft verbunden ist. Die Vorteile sind hierbei: Der gesamte Container inklusive seiner Wandung bleibt kühl, im Container wird kein zusätzlicher Platz benötigt, und es müssen keine zusätzlichen Kabel für die Peltierelemente in den Container eingeführt werden. Die letztgenannte Ausführung ist günstig, wenn die Batteriezellen einen thermischen Kontakt zur Containerwand haben oder die Containeraußenwand thermisch gut isoliert ist.

Zur Steuerung der Peltierelemente werden vorzugsweise folgende zwei Verfahren eingesetzt: Verfahren 1 (Umgebungstemperaturüberwachung): Die zu erwartende Erwärmung der Bordnetzbatterie bei außergewöhnlicher Belastung, beispielsweise einer Notfahrt ohne externe Energieversorgung, wird vorzugsweise rechnerisch oder experimentell ermittelt. Die so ermittelte Verlustleistung der Bordnetzbatterie wird vorzugsweise anhand des thermischen Verhaltens rechnerisch oder experimentell in eine Temperaturerhöhung umgerechnet. Aus der anzunehmenden oder gemessenen Umgebungs- oder Batteriezelltemperatur ergibt sich die anzunehmende Endtemperatur der Bordnetzbatterie. Die Peltier-Kühlleistung wird vorzugsweise so bemessen, dass die Bordnetzbatterie bei Erwärmung (Energieeintrag) durch die maximal anzunehmende Umgebungstemperatur auf einem Temperaturniveau gehalten werden kann, welches den erforderlichen Temperaturhub abdeckt, ohne dass bei dem anzunehmenden Wärmeeintrag die noch zulässige Grenztemperatur der Batterie überschritten wird. Die Peltierelemente werden vorzugsweise vom Bordnetz versorgt. Ist die anzunehmende oder gemessene Umgebungs- oder Zelltemperatur zu hoch, wird der Batteriecontainer, und damit indirekt die Batteriezellen, vorzugsweise durch die auf dem Container angebrachten Peltierelemente auf eine Temperatur gekühlt, welche es der Batterie erlaubt, die anzunehmende Leistung abzugeben, ohne dass der Temperaturhub zu einer Überhitzung führt. Im einfachsten Fall erfolgt die Steuerung der Peltierelemente vorzugsweise durch einen Zweipunktregler gemäß Stand der Technik, wobei das Zuschalten bei Umgebungs- oder Batterietemperaturen von T>Tmax erfolgt und das Abschalten bei T<Tmax-Thysterese, Thysterese ist frei wählbar >0, beispielsweise 1 K. Das temperaturabhängige Zu-/Abschalten der Peltierelemente kann beispielsweise durch das Batteriemanagementsystem oder die Zugsteuerung erfolgen, wobei keine neuen Steuerungselemente erforderlich sind. Vorteil des letztgenannten Verfahrens ist, dass die Peltier-Leistung sehr klein bemessen werden kann, da nur der Wärmeeintrag durch die Umgebung von außen kompensiert werden muss, nicht jedoch der Wärmeeintrag durch die Batterieverluste. Die benötigte Energie kann aus dem Bordnetz bezogen werden, nicht aus der Batterie. In dem Verfahren 2 (Lasterfassung) wird der anzunehmende Temperaturhub vorzugsweise wie in Verfahren 1 berechnet. Die Kühlleistung der Peltierelemente wird vorzugsweise so bemessen, dass sie im eingeschalteten Zustand die Verlustleistung der Bordnetzbatterie im anzunehmenden Belastungsfall so weit kompensieren können, dass der Temperaturhub so weit reduziert wird, dass er nicht zu einer Überhitzung führt. Die Peltier-Kühlung wird vorzugsweise dann aktiviert, wenn die Bordnetzbatterie die definierte Belastung erfährt, was beispielsweise durch Messung eines Batteriestromes iBatt > eines definierten Grenzwertes iGrenz (beispielsweise 1 A) erfolgen kann. Da dies im Allgemeinen der Fall ist, wenn das Bordnetz ausgefallen ist, werden die Peltierelemente in diesem Fall vorzugsweise direkt von der Batterie selbst versorgt. Alternativ oder in Kombination zum Strom kann auch direkt die Batterietemperatur zur Steuerung verwendet werden. Ein Vorteil des letztgenannten Verfahrens ist, dassdie Kühlung nur aktiviert wird, wenn die Batterie belastet wird, während in der übrigen Zeit keine Energie zur Kühlung verbraucht wird.

Andere denkbare Auslöser zum Einschalten der Kühlung sind beispielsweise ein Ausfall der Bordnetzversorgung bzw. der externen Versorgung, die Aktivierung der Notfahrfunktion, eine manuelle Aktivierung oder ortsabhängig, letzterer beispielsweise über GPS oder bei Orten, an denen bei einer Notfahrt eine hohe Belastung auftritt.

Manche Komponenten von Schienenfahrzeugen, insbesondere Bordnetzbatterien, können im Betrieb stark unterschiedlich bzw. intermittierend belastet werden und sich dann zeitweise unzulässig erwärmen und müssen daher zeitweise gekühlt werden. Dies gilt insbesondere für Bordnetzbatterien, wenn die normale Bordnetzversorgung ausgefallen ist und die Bordnetzbatterie neben der Versorgung der Eigenverbraucher gleichzeitig auch zu Notfahrten genutzt wird. Als Energiespeicher werden demgemäß vorzugsweise Bordnetzbatterien in der beschriebenen Weise gekühlt. Die beschriebenen Kühlverfahren benötigen bei Einsatz von Peltierelementen wenig Instandhaltung, wenig Bauraum und führen anders als Ventilatoren oder dergleichen zu keiner Lärmbelästigung.

## Patentansprüche

1. Fahrzeug, insbesondere Schienenfahrzeug (10), mit einem Energiespeicher (15) und einer Kühleinrichtung (16), die zum Kühlen des Energiespeichers (15) geeignet ist,
wobei zum Ansteuern der Kühleinrichtung (16) eine Steuereinrichtung (17) vorhanden ist, die dazu ausgestaltet ist, auf der Basis von Belastungsdaten, die eine bei der weiteren Fahrt zu erwartende Belastung oder eine möglicherweise bei der weiteren Fahrt notwendig werdende Belastung des Energiespeichers (15) beschreiben, einen Kühlbedarf zu prognostizieren und die Kühleinrichtung (16) in Abhängigkeit von dem prognostizierten Kühlbedarf zu steuern,
**dadurch gekennzeichnet, dass**
die Steuereinrichtung (17) dazu ausgestaltet ist, das Erfüllen zumindest einer Auslösebedingung zu prüfen und bei Erfüllung der zumindest einen Auslösebedingung die Kühleinrichtung (16) zu aktivieren und den Energiespeicher (15) zu kühlen,
und
die Steuereinrichtung (17) dazu ausgestaltet ist, bei Erfüllung der Auslösebedingung oder zumindest einer der Auslösebedingungen die Kühleinrichtung (16) noch vor Eintritt der tatsächlichen Belastung des Energiespeichers (15) zu aktivieren und die Temperatur des Energiespeichers (15) abzusenken und somit noch vor Eintritt der tatsächlichen Belastung einen Kühlpuffer (dT) für den Energiespeicher (15) zu erzeugen.

2. Fahrzeug nach Anspruch 1,
**dadurch gekennzeichnet, dass**
die Steuereinrichtung (17) dazu ausgestaltet ist, auf der Basis des prognostizierten Kühlbedarfs einen Sollkühlleistungswert zu ermitteln, der die Sollkühlleistung angibt, mit der die Kühleinrichtung (16) zum Decken des prognostizierten Kühlbedarfs arbeiten soll.

3. Fahrzeug nach Anspruch 1 oder 2,
**dadurch gekennzeichnet, dass**
die Prüfung der Auslösebedingung oder zumindest einer der Auslösebedingungen darin besteht, zu prüfen, ob ein vorgegebener Streckenpunkt (X0) passiert wird oder worden ist.

4. Fahrzeug nach einem der voranstehenden Ansprüche,
**dadurch gekennzeichnet, dass**
die Auslösebedingung oder zumindest eine der Auslösebedingungen als erfüllt angesehen wird, wenn ein Entnahmestrom aus dem Energiespeicher (15) eine vorgegebene Entnahmestromschwelle erreicht oder überschreitet.

5. Fahrzeug nach einem der voranstehenden Ansprüche,
**dadurch gekennzeichnet, dass**
die Auslösebedingung oder zumindest eine der Auslösebedingungen als erfüllt angesehen wird, wenn die Umgebungstemperatur des Energiespeichers (15) eine vorgegebene Temperaturschwelle erreicht oder überschreitet.

6. Fahrzeug nach einem der voranstehenden Ansprüche,
**dadurch gekennzeichnet, dass**
die Auslösebedingung oder zumindest eine der Auslösebedingungen als erfüllt angesehen wird, wenn die Gehäusetemperatur eines den Energiespeicher (15) aufnehmenden Gehäuses (100) eine vorgegebene Temperaturschwelle erreicht oder überschreitet.

7. Fahrzeug nach einem der voranstehenden Ansprüche,
**dadurch gekennzeichnet, dass**
die Kühleinrichtung (16) zumindest ein Peltierelement umfasst, das an einer Außenseite einer Gehäusewand eines den Energiespeicher (15) aufnehmenden Gehäuses (100) angebracht ist.

8. Fahrzeug nach einem der voranstehenden Ansprüche,
**dadurch gekennzeichnet, dass**
die Kühleinrichtung (16) zumindest ein Peltierelement umfasst, das an einer Innenseite einer Gehäusewand eines den Energiespeicher (15) aufnehmenden Gehäuses (100) angebracht ist.

9. Fahrzeug nach einem der voranstehenden Ansprüche,
**dadurch gekennzeichnet, dass**
die Kühleinrichtung (16) zumindest eine Reihenschaltung (161) an Peltierelementen umfasst, die beim Betrieb der Kühleinrichtung (16) mit der an den Anschlussklemmen des Energiespeichers (15) anliegenden Spannung beaufschlagt wird.

10. Fahrzeug nach einem der voranstehenden Ansprüche,
**dadurch gekennzeichnet, dass**
- die Kühleinrichtung (16) zwei oder mehr elektrisch parallel geschaltete Reihenschaltungen (161) an Peltierelementen (162) umfasst, die einzeln aktivierbar sind und nach Aktivierung jeweils mit der an den Anschlussklemmen des Energiespeichers (15) anliegenden Spannung beaufschlagt werden, und
- die Steuereinrichtung (17) dazu ausgestaltet ist, die Anzahl der zu aktivierenden Reihenschaltungen (161) in Abhängigkeit vom prognostizierten Kühlbedarf festzulegen.

11. Fahrzeug nach Anspruch 10,
**dadurch gekennzeichnet, dass**
die Steuereinrichtung (17) dazu ausgestaltet ist, die Anzahl der zu aktivierenden Reihenschaltungen (161) derart zu wählen, dass die Kühlleistung durch die aktivierten Reihenschaltungen (161) der jeweiligen Sollkühlleistung entspricht, die die Kühleinrichtung (16) zum Decken des prognostizierten Kühlbedarfs erzeugen soll.

12. Verfahren zum Kühlen eines Energiespeichers (15) eines Fahrzeugs, insbesondere Schienenfahrzeugs (10), mit einer Kühleinrichtung (16),
wobei auf der Basis von Belastungsdaten, die eine bei der weiteren Fahrt zu erwartende Belastung oder eine während der Fahrt möglicherweise notwendige Belastung des Energiespeichers (15) beschreiben, ein Kühlbedarf prognostiziert wird und die Kühleinrichtung (16) in Abhängigkeit von dem prognostizierten Kühlbedarf gesteuert wird,
**dadurch gekennzeichnet, dass**
von der Steuereinrichtung (17) das Erfüllen zumindest einer Auslösebedingung geprüft wird und bei Erfüllung der zumindest einen Auslösebedingung die Kühleinrichtung (16) aktiviert wird und der Energiespeicher (15) gekühlt wird, und bei Erfüllung der Auslösebedingung oder zumindest einer der Auslösebedingungen die Kühleinrichtung (16) noch vor Eintritt der tatsächlichen Belastung des Energiespeichers (15) aktiviert wird und die Temperatur des Energiespeichers (15) abgesenkt wird und somit noch vor Eintritt der tatsächlichen Belastung einen Kühlpuffer (dT) für den Energiespeicher (15) erzeugt wird.

## Claims

1. Vehicle, in particular rail vehicle (10), having an energy storage unit (15) and a cooling facility (16) which is suited to cooling the energy storage unit (15),
wherein in order to actuate the cooling facility (16) a control facility (17) is available, which is designed to predict a cooling requirement and to control the cooling facility (16) as a function of the predicted cooling requirement on the basis of load data which describes a load to be expected during the onward journey or a load of the energy storage unit (15) which will possibly become necessary during the onward journey,
**characterised in that**
the control facility (17) is designed to check the fulfilment of at least one trigger condition and when the at least one trigger condition is fulfilled to activate the cooling facility (16) and to cool the energy storage unit (15),
and
the control facility (17) is designed to activate the cooling facility (16) even before the occurrence of the actual load of the energy storage unit when the trigger condition or at least one of the trigger conditions is fulfilled, and to lower the temperature of the energy storage unit (15) and thus to generate a cooling buffer (dT) for the energy storage unit (15) even before the occurrence of the actual load.

2. Vehicle according to claim 1,
**characterised in that**
the control facility (17) is designed to determine a target cooling power value on the basis of the predicted cooling requirement, said target cooling power value specifying the target cooling power with which the cooling facility (16) is to operate in order to cover the predicted cooling requirement.

3. Vehicle according to claim 1 or 2,
**characterised in that**
the check of the trigger condition or at least one of the trigger conditions consists in checking whether a predetermined route point (X0) is being or has been passed.

4. Vehicle according to one of the preceding claims,
**characterised in that**
the trigger condition or at least one of the trigger conditions is considered to be fulfilled if a discharge current from the energy storage unit (15) reaches or exceeds a predetermined discharge current threshold.

5. Vehicle according to one of the preceding claims,
**characterised in that**
the trigger condition or at least one of the trigger conditions is considered to be fulfilled if the ambient temperature of the energy storage unit (15) reaches or exceeds a predetermined threshold value.

6. Vehicle according to one of the preceding claims,
**characterised in that**
the trigger condition or at least one of the trigger conditions is considered to be fulfilled if the housing temperature of a housing (100) receiving the energy storage unit (15) reaches or exceeds a predetermined temperature threshold.

7. Vehicle according to one of the preceding claims,
**characterised in that**
the cooling facility (16) comprises at least one Peltier element, which is attached to an exterior of a housing wall of a housing (100) receiving the energy storage unit (15).

8. Vehicle according to one of the preceding claims,
**characterised in that**
the cooling facility (16) comprises at least one Peltier element, which is attached to an interior of a housing wall of a housing (100) receiving the energy storage unit (15).

9. Vehicle according to one of the preceding claims,
**characterised in that**
the cooling facility (16) comprises at least one series circuit (161) of Peltier elements, to which, during operation of the cooling facility (16), the voltage prevailing at the terminals of the energy storage unit (15) is applied.

10. Vehicle according to one of the preceding claims, **characterised in that**
- the cooling facility (16) comprises two or more series circuits (161) of Peltier elements (162), electrically connected in parallel, which can be activated individually and to each of which, after activation, the voltage prevailing at the terminals of the energy storage unit (15) is applied, and
- the control facility (17) is designed to fix the number of series circuits (161) to be activated as a function of the predicted cooling requirement.

11. Vehicle according to claim 10,
**characterised in that**
the control facility (17) is designed to select the number of series circuits (161) to be activated so that the cooling power through the activated series circuits (161) corresponds to the respective target cooling power which the cooling facility (16) is to generate in order to cover the predicted cooling requirement.

12. Method for cooling an energy storage unit (15) of a vehicle, in particular rail vehicle (10), having a cooling facility (16),
wherein on the basis of load data, which describes a load to be expected during the onward journey or a load of the energy storage unit (15) which is possibly required during the journey, a cooling requirement is predicted and the cooling facility (16) is controlled as a function of the predicted cooling requirement,
**characterised in that**
the control facility (17) checks the fulfilment of at least one trigger condition and upon fulfilment of the at least one trigger condition the cooling facility (16) is activated and the energy storage unit (15) is cooled, and upon fulfilment of the trigger condition or at least one of the trigger conditions, the cooling facilty (16) is activated even before the occurrence of the actual load of the energy storage unit (15) and the temperature of the energy storage unit (15) is reduced and thus a cooling buffer (dT) is generated for the energy storage unit (15) even before the occurrence of the actual load.

## Revendications

1. Véhicule, en particulier véhicule (10) ferroviaire, comprenant un accumulateur (15) d'énergie et un dispositif (16) de refroidissement, qui est approprié au refroidissement de l'accumulateur (15) d'énergie,
dans lequel, pour la commande du dispositif (16) de refroidissement, il y a un dispositif (17) de commande, qui est conformé pour, sur la base de données de charge, qui décrivent une charge à escompter dans le reste du trajet ou une charge de l'accumulateur (15) d'énergie devenant nécessaire le cas échéant dans le reste du trajet, pronostiquer un besoin de refroidissement et commander le dispositif (16) de refroidissement en fonction du besoin de refroidissement pronostiqué,
**caractérisé en ce que**
le dispositif (17) de commande est conformé pour contrôler si au moins une condition de déclenchement est satisfaite et, lorsque la au moins une condition de déclenchement est satisfaite, activer le dispositif (16) de refroidissement et refroidir l'accumulateur (15) d'énergie, et
le dispositif (17) de commande est conformé pour, lorsque la condition de déclenchement est satisfaite ou lorsqu'au moins l'une des conditions de déclenchement est satisfaite, activer le dispositif (16) de refroidissement, dès avant que survienne la charge réelle de l'accumulateur (15) d'énergie et abaisser la température de l'accumulateur (15) d'énergie et ainsi, dès avant que survienne la charge réelle, produire un tampon (dT) de refroidissement pour l'accumulateur (15) d'énergie.

2. Véhicule suivant la revendication 1,
**caractérisé en ce que**
le dispositif (17) de commande est conformé pour, sur la base du besoin de refroidissement pronostiqué, déterminer une valeur de puissance de refroidissement de consigne, qui indique la puissance de refroidissement de consigne, avec laquelle le dispositif (16) de refroidissement doit travailler pour couvrir le besoin de refroidissement pronostiqué.

3. Véhicule suivant la revendication 1 ou 2,
**caractérisé en ce que**
le contrôle de la condition de déclenchement ou d'au moins l'une des conditions de déclenchement consiste à contrôler si on passe ou on est passé sur un point (X0) de voie donné à l'avance.

4. Véhicule suivant l'une des revendications précédentes,
**caractérisé en ce que**
l'on considère comme satisfaite la condition de déclenchement ou au moins l'une des conditions de déclenchement, si un courant de prélèvement de l'accumulateur (15) d'énergie atteint ou dépasse un seuil de courant de prélèvement donné à l'avance.

5. Véhicule suivant l'une des revendications précédentes,
**caractérisé en ce que**
l'on considère comme satisfaite la condition de déclenchement ou au moins l'une des conditions de déclenchement, si la température ambiante de l'accumulateur (15) d'énergie atteint ou dépasse un seuil de température donné à l'avance.

6. Véhicule suivant l'une des revendications précédentes,
**caractérisé en ce que**
l'on considère comme satisfaite la condition de déclenchement ou au moins l'une des conditions de déclenchement, si la température d'une enveloppe (100) recevant l'accumulateur (15) d'énergie atteint ou dépasse un seuil de température donné à l'avance.

7. Véhicule suivant l'une des revendications précédentes,
**caractérisé en ce que**
le dispositif (16) de refroidissement comprend au moins un élément Peltier, qui est monté sur une face extérieure d'une paroi d'une enveloppe (100) recevant l'accumulateur (15) d'énergie.

8. Véhicule suivant l'une des revendications précédentes,
**caractérisé en ce que**
le dispositif (16) de refroidissement comprend au moins un élément Peltier, qui est monté sur une face intérieure d'une paroi d'une enveloppe (100) recevant l'accumulateur (15) d'énergie.

9. Véhicule suivant l'une des revendications précédentes,
**caractérisé en ce que**
le dispositif (16) de refroidissement comprend au moins un circuit (161) série d'éléments Peltier qui, lors du fonctionnement du dispositif (16) de refroidissement, est alimenté en la tension s'appliquant aux bornes de l'accumulateur (15) d'énergie.

10. Véhicule suivant l'une des revendications précédentes,
**caractérisé en ce que**
- le dispositif (16) de refroidissement comprend deux ou plusieurs circuits (161) série d'éléments (162) Peltier montés électriquement en parallèle, qui peuvent être activés individuellement et qui, après activation, sont alimentés respectivement par la tension s'appliquant aux bornes de l'accumulateur (15) d'énergie, et
- le dispositif (17) de commande est conformé pour fixer le nombre des circuits (161) série à activer en fonction du besoin de refroidissement pronostiqué.

11. Véhicule suivant la revendication 10,
**caractérisé en ce que**
le dispositif (17) de commande est conformé pour sélectionner le nombre des circuits (161) série à activer, de manière à ce que la puissance de refroidissement par les circuits (161) série à activer corresponde à la puissance de refroidissement de consigne respective que le dispositif (16) de refroidissement doit produire pour couvrir le besoin de refroidissement pronostiqué.

12. Procédé de refroidissement d'un accumulateur (15) d'énergie d'un véhicule, en particulier d'un véhicule (10) ferroviaire, comprenant un dispositif (16) de refroidissement,
dans lequel, sur la base de données de charge, qui décrivent une charge à escompter lors du reste du trajet ou une charge nécessaire de l'accumulateur (15) d'énergie le cas échéant pendant le trajet, on pronostique un besoin de refroidissement et on commande le dispositif (16) de refroidissement en fonction du besoin de refroidissement pronostiqué,
**caractérisé en ce que**
on contrôle, par le dispositif (17) de commande, qu'au moins une condition de déclenchement est satisfaite et, lorsque la au moins une condition de déclenchement est satisfaite, on active le dispositif (16) de refroidissement et on refroidit l'accumulateur (15) d'énergie et, lorsque la condition de déclenchement est satisfaite ou lorsqu'au moins l'une des conditions de déclenchement est satisfaite, on active le dispositif (16) de refroidissement, dès avant que survienne la charge réelle de l'accumulateur (15) d'énergie et on abaisse la température de l'accumulateur (15) d'énergie et on produit ainsi, dès avant que survienne la charge réelle, un tampon (dT) de refroidissement pour l'accumulateur (15) d'énergie.
